# EUROPÄISCHE PATENTSCHRIFT

(11) **EP 3 383 629 B1**
(45) Veröffentlichungstag und Bekanntmachung des Hinweises auf die Patenterteilung: **20.01.2021**
(21) Anmeldenummer: 16815750.1
(22) Anmeldetag: 02.12.2016
(51) Int. Cl.: B29C 70/50

(54) **PRODUKTIONSVORRICHTUNG, INSBESONDERE SMC-PRODUKTIONSVORRICHTUNG, ZU EINER HERSTELLUNG VON DUROPLASTISCHEN HALBZEUGEN**
PRODUCTION DEVICE, IN PARTICULAR SMC PRODUCTION DEVICE, FOR PRODUCING THERMOSET PREPREGS
DISPOSITIF DE PRODUCTION, EN PARTICULIER DISPOSITIF DE PRODUCTION SMC POUR LA FABRICATION DE PRODUITS SEMI-FINIS THERMODURCISSABLES

(30) Priorität: 02.12.2015 DE 102015120969
(43) Veröffentlichungstag der Anmeldung: 10.10.2018
(73) Patentinhaber: Schmidt & Heinzmann GmbH & Co. KG, 76646 Bruchsal (DE)
(72) Erfinder: FEIL, Matthias, 88214 Ravensburg (DE)
(74) Vertreter: Daub, Thomas
(86) Internationale Anmeldenummer: PCT/EP2016/079629
(87) Internationale Veröffentlichungsnummer: WO 2017/093506

(56) Entgegenhaltungen:
- DE-A1-102009 046 670
- US-A- 4 219 524

## Beschreibung

### Stand der Technik

Die Erfindung betrifft eine Produktionsvorrichtung nach dem Oberbegriff des Anspruchs 1 und ein Verfahren nach dem Oberbegriff des Anspruchs 11. Es sind bereits Produktionsvorrichtungen, insbesondere SMC-Produktionsvorrichtungen, zu einer Herstellung von duroplastischen Halbzeugen bekannt, wobei die Produktionsvorrichtungen zumindest eine Rahmeneinheit und zumindest eine Transporteinheit zu einem Transport zumindest eines Materialstrangs umfassen. Die Transporteinheit ist hierbei an der Rahmeneinheit angeordnet.

Aus DE 10 2009 046 670 A1 sowie aus DE 10 2006 042 999 B3 sind bereits Produktionsvorrichtungen, insbesondere SMC-Produktionsvorrichtungen, zu einer Herstellung von duroplastischen Halbzeugen bekannt, die zumindest eine Rahmeneinheit und zumindest eine Transporteinheit zu einem Transport zumindest eines Materialstrangs, die an der Rahmeneinheit angeordnet ist, umfassen, wobei die Transporteinheit zumindest ein Förderband, das zu einer Aufnahme des Materialstrangs vorgesehen ist, und eine Vielzahl an Wälzelementen umfasst, an denen das Förderband der Transporteinheit anliegt und/oder mittels derer das Förderband der Transporteinheit beweglich gelagert ist.

Ferner ist aus US 4 219 524 A bereits eine Produktionsvorrichtung zu einer Herstellung von duroplastischen Halbzeugen bekannt, die eine Rahmeneinheit und eine Transporteinheit zu einem Transport zumindest eines Materialstrangs umfasst, die an der Rahmeneinheit angeordnet ist, wobei die Transporteinheit zumindest ein Förderband, das zu einer Aufnahme des Materialstrangs vorgesehen ist, und eine Vielzahl an Wälzelementen umfasst, an denen das Förderband der Transporteinheit anliegt und/oder mittels derer das Förderband der Transporteinheit beweglich gelagert ist. Die bereits aus der US 4 219 524 A bekannte Produktionsvorrichtung umfasst zudem einer Lagereinheit, die dazu vorgesehen ist, die Transporteinheit zumindest im Wesentlichen als Ganzes relativ zur Rahmeneinheit beweglich zu lagern, wobei das Förderband und die Vielzahl an Wälzelementen, mittels deren das Förderband beweglich gelagert und/oder geführt ist, gemeinsam an einer Gestelleinheit der Lagereinheit angeordnet sind, wobei die Gestelleinheit relativ zur Rahmeneinheit beweglich gelagert ist, insbesondere translatorisch beweglich gelagert ist.

Die Aufgabe der Erfindung besteht insbesondere darin, eine gattungsgemäße Produktionsvorrichtung und Verfahren bereitzustellen, die eine hohe Servicefreundlichkeit bei einer kompakten Ausgestaltung aufweist und zudem eine hohe Bedienersicherheit bietet. Die Aufgabe wird erfindungsgemäß durch die Merkmale des Patentanspruchs 1 und des Patentanspruchs 11 gelöst, während vorteilhafte Ausgestaltungen und Weiterbildungen der Erfindung den Unteransprüchen entnommen werden können.

### Vorteile der Erfindung

Die Erfindung geht aus von einer Produktionsvorrichtung, insbesondere von einer SMC-Produktionsvorrichtung, zu einer Herstellung von duroplastischen Halbzeugen, wie beispielsweise Sheet Moulding Compounds (SMC), Prepregs o. dgl., mit zumindest einer Rahmeneinheit, mit zumindest einer Transporteinheit zu einem Transport zumindest eines Materialstrangs, die an der Rahmeneinheit angeordnet ist, wobei die Transporteinheit zumindest ein Förderband, das zu einer Aufnahme des Materialstrangs vorgesehen ist, und eine Vielzahl an Wälzelementen umfasst, an denen das Förderband der Transporteinheit anliegt und/oder mittels derer das Förderband der Transporteinheit beweglich gelagert ist, und mit zumindest einer Lagereinheit, die dazu vorgesehen ist, die Transporteinheit zumindest im Wesentlichen als Ganzes relativ zur Rahmeneinheit beweglich zu lagern, wobei das Förderband und die Vielzahl an Wälzelementen, mittels deren das Förderband beweglich gelagert und/oder geführt ist, gemeinsam an einer Gestelleinheit der Lagereinheit angeordnet sind, wobei die Gestelleinheit relativ zur Rahmeneinheit beweglich gelagert ist, insbesondere translatorisch beweglich gelagert ist.

Es wird vorgeschlagen, dass die Produktionsvorrichtung zumindest eine Gehäuseeinheit umfasst, die in zumindest einem Zustand zumindest teilweise zumindest die Transporteinheit zumindest im Wesentlichen als Ganzes umschließt, wobei die Gehäuseeinheit zumindest ein bewegbares und/oder abnehmbares Verschlusselement aufweist, das zumindest zu einem Verschließen zumindest einer Öffnung vorgesehen ist, durch die zumindest die Transporteinheit mittels der Lagereinheit zumindest im Wesentlichen als Ganzes relativ zur Rahmeneinheit zumindest teilweise aus der Gehäuseeinheit heraus bewegbar ist.

Vorzugsweise umschließt die Gehäuseeinheit die Transporteinheit vollständig. Die Gehäuseeinheit bildet vorzugsweise eine Umhausung der Produktionsvorrichtung, in der Bauteile und/oder Baueinheiten der Produktionsvorrichtung zumindest im Wesentlichen als Ganzes angeordnet sind. Es ist denkbar, dass die Gehäuseeinheit eine Bodenplatte aufweist, an der die Rahmeneinheit und/oder die Transporteinheit angeordnet sind, oder dass die Gehäuseeinheit entkoppelt von der Bodenplatte ausgebildet ist und zumindest die Transporteinheit zumindest im Wesentlichen als Ganzes zumindest von drei Seiten umgibt. Die Gehäuseeinheit ist bevorzugt zumindest teilweise an der Rahmeneinheit angeordnet, insbesondere mit der Rahmeneinheit verbunden und/oder an der Rahmeneinheit fixiert, wie beispielsweise mittels einer stoff-, form- und/oder kraftschlüssigen Verbindung. Es ist jedoch auch denkbar, dass die Gehäuseeinheit zumindest teilweise einteilig mit der Rahmeneinheit ausgebildet ist oder dass die Gehäuseeinheit zumindest teilweise die Rahmeneinheit bildet. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Bevorzugt umfasst die Produktionsvorrichtung zumindest eine Beleuchtungseinheit, die insbesondere in der Gehäuseeinheit angeordnet ist. Die Beleuchtungseinheit umfasst vorzugsweise zumindest ein Beleuchtungselement, insbesondere eine RGB-LED, die dazu vorgesehen ist, einen Innenraum der Gehäuseeinheit zu beleuchten. Vorzugsweise ist das Beleuchtungselement in zumindest einem Betriebszustand dazu vorgesehen, den Innenraum in einer blauen Farbe zu beleuchten, um eine korrekte Funktionsweise der Produktionsvorrichtung darzustellen. Es ist auch denkbar, dass vorgesehen ist, die Beleuchtungseinheit zu einer Beleuchtung des Innenraums der Gehäuseeinheit in einer anderen, einem Fachmann als sinnvoll erscheinenden Farbe zu beleuchten, wie beispielsweise in Rot, um eine Fehlfunktion dazustellen, in Gelb, um einen Wartungsmodus darzustellen, o. dgl.

Unter "vorgesehen" soll insbesondere speziell ausgelegt und/oder speziell ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt.

Unter einer "SMC-Produktionsvorrichtung" soll hier insbesondere eine Vorrichtung zur Produktion von faserverstärkten duroplastischen Werkstoffen, Sheet Moulding Compounds (SMC), verstanden werden, die zu einer Produktion von mattenartigen Formmassen, insbesondere von Harzmatten, vorgesehen ist. Bevorzugt ist die SMC-Produktionsvorrichtung durch Fördervorrichtungen, wie beispielsweise Förderbänder, Industrieroboter usw., mit einer weiterverarbeitenden Produktionsvorrichtung, wie beispielsweise einer Presse usw., verbunden. Unter einer "Transporteinheit" soll hier insbesondere eine Einheit zu einem Transport zumindest eines Produktionsguts, insbesondere des Materialstrangs, entlang einer vorgegebenen Produktionsrichtung verstanden werden. Vorzugsweise umfasst die Transporteinheit zumindest ein Förderband und/oder zumindest eine Förderwalze. Besonders bevorzugt umfasst die Transporteinheit zumindest ein Förderband und zumindest ein Wälzelement, auf dem das Förderband zumindest temporär aufliegt und/oder das von dem Förderband zumindest teilweise umschlungen ist. Es ist jedoch auch denkbar, dass die Transporteinheit alternativ oder zusätzlich andere, einem Fachmann als sinnvoll erscheinende Transportelemente aufweist, wie beispielsweise Luftkissenförderer o. dgl. Die Transporteinheit kann alternativ oder zusätzlich zumindest ein Trägermittel aufweisen, das gezielt dazu vorgesehen ist, einzelne Komponenten des Materialstrangs aufzunehmen und/oder ein Transportelement, insbesondere das Förderband, vor Verunreinigungen und/oder vor einem Ankleben des Materialstrangs zu schützen. Vorzugsweise ist das Trägermittel als Trägerfolie ausgebildet, die insbesondere auf dem Förderband anordenbar ist. Es ist jedoch auch denkbar, dass das Trägermittel als Trägerpulver ausgebildet ist, das auf das Transportelement, insbesondere das Förderband der Transporteinheit, aufgetragen werden kann. Der Begriff "Materialstrang" soll hier insbesondere eine klebrige, zusammenhängende Formmasse definieren, die Fasern, insbesondere geschnittene Fasern, zumindest ein vernetzungsfähiges Harz und Zusatzstoffe, wie beispielsweise Additive zur Schwundreduktion, Trennmittel, Reaktionsmittel o.dgl., aufweist. Die Fasern können jegliche, einem Fachmann als sinnvoll erscheinende Ausgestaltung aufweisen, wie beispielsweise eine Ausgestaltung als Schnittglas, als Kevlarfasern, als Kunststofffasern, als Naturfasern o. dgl. Denkbar ist auch, dass alternativ Gewirke bei einer Herstellung des Materialstrangs genutzt werden.

Unter einer "Rahmeneinheit" soll hier insbesondere eine Einheit verstanden werden, die dazu vorgesehen ist, Gewichtskräfte von Elementen und/oder Einheiten der Produktionsvorrichtung und/oder Kräfte, die bei einer Produktion auftreten, abzustützen. Bevorzugt ist die Rahmeneinheit als Maschinenrahmen oder als Maschinengestell ausgebildet. Vorzugsweise weist die Rahmeneinheit zumindest einen Standfuß, insbesondere eine Vielzahl an Standfüßen, und/oder eine Standfläche auf, der/die an einem Untergrund anliegt, insbesondere bei einer, einem Fachmann bereits bekannten ordnungsgemäßen Aufstellung und/oder Nutzung der Produktionsvorrichtung und/oder der Rahmeneinheit.

Der Ausdruck "zumindest im Wesentlichen als Ganzes" soll hier mehr als 50 %, bevorzugt mehr als 70 % und besonders bevorzugt mehr als 90 % einer Gesamtanzahl von Einzelelementen einer Einheit oder eines Gesamtvolumens einer Einheit oder eines Elements definieren. Vorzugsweise ist die Lagereinheit dazu vorgesehen, zumindest ein Transportelement, insbesondere ein Förderband, der Transporteinheit und zumindest ein Wälzelement der Transporteinheit, mittels dessen das Transportelement beweglich gelagert und/oder geführt ist, gemeinsam relativ zur Rahmeneinheit beweglich zu lagern. Besonders bevorzugt ist die Lagereinheit dazu vorgesehen, zumindest ein Transportelement, insbesondere ein Förderband, der Transporteinheit und eine Vielzahl an Wälzelementen der Transporteinheit, mittels denen das Transportelement beweglich gelagert und/oder geführt ist, gemeinsam relativ zur Rahmeneinheit beweglich zu lagern. Die Lagereinheit kann als Linearlagereinheit, als Rotationslagereinheit, als Schwenklagereinheit oder als Kombination aus einer Linear-, Rotations- und Schwenklagereinheit ausgebildet sein. Die Transporteinheit kann zumindest im Wesentlichen als Ganzes mittels der Lagereinheit translatorisch und/oder rotatorisch relativ zur Rahmeneinheit beweglich gelagert sein. Der Ausdruck "beweglich gelagert" soll hier insbesondere eine Lagerung einer Einheit und/oder eines Elements definieren, wobei die Einheit und/oder das Element, insbesondere entkoppelt von einer elastischen Verformung der Einheit und/oder des Elements, eine Bewegungsmöglichkeit entlang zumindest einer Strecke größer als 10 mm, bevorzugt größer als 100 mm und besonders bevorzugt größer als 500 mm aufweist und/oder eine Bewegungsmöglichkeit um zumindest eine Achse um einen Winkel größer als 5°, bevorzugt größer als 15° und besonders bevorzugt größer als 45° aufweist. Vorzugsweise ist das Verschlusselement als Türe oder als Klappe ausgebildet. Es ist jedoch auch denkbar, dass das Verschlusselement eine andere, einem Fachmann als sinnvoll erscheinende Ausgestaltung aufweist, wie beispielsweise als Deckel, als Abdeckung o. dgl. Das Verschlusselement kann unabhängig von der Lagereinheit beweglich gelagert sein oder mittels der Lagereinheit beweglich gelagert sein, wie beispielsweise infolge einer Anordnung an einem Gestell der Lagereinheit o. dgl.

Mittels der erfindungsgemäßen Ausgestaltung kann vorteilhaft eine hohe Servicefreundlichkeit bei einer kompakten Ausgestaltung der Produktionsvorrichtung erreicht werden. Es kann vorteilhaft in wenigen Arbeitsschritten eine Wartung und/oder Reparatur der Transporteinheit zumindest im Wesentlichen als Ganzes ermöglicht werden. Es kann vorteilhaft eine Zeitersparnis bei einer Wartung und/oder Reparatur der Transporteinheit zumindest im Wesentlichen als Ganzes erreicht werden. Es kann vorteilhaft eine hohe Bedienersicherheit erreicht werden, insbesondere bei einer Ausgestaltung der Produktionsvorrichtung mit einer Absaugvorrichtung. Es kann vorteilhaft eine Schutzatmosphäre um die Transporteinheit geschaffen werden, die eine Ausbreitung, insbesondere eine Ausdunstung, von gefährlichen und/oder giftigen Inhaltsstoffen des Materialstrangs in eine die Produktionsvorrichtung umgebende Umwelt vorteilhaft gering halten kann oder zum Großteil vermeiden kann. Mittels der erfindungsgemäßen Ausgestaltung kann vorteilhaft eine komfortable Zugänglichkeit zu einem Innenraum der Gehäuseeinheit ermöglicht werden.

Des Weiteren wird vorgeschlagen, dass die Transporteinheit zumindest eine Verdichtungseinheit zu einer Verdichtung des zumindest einen Materialstrangs umfasst, die zumindest eine Verdichtungsstreckenhauptachse aufweist, die mit einer Horizontalebene einen Winkel einschließt, der kleiner ist als 90°. Es ist denkbar, dass die Produktionsvorrichtung zur Lösung der oben genannten Aufgabe in einer alternativen Ausgestaltung unabhängig von der Lagereinheit ausgebildet ist. Vorzugsweise umfasst die Produktionsvorrichtung in der alternativen Ausgestaltung, insbesondere in der unabhängig von der Lagereinheit ausgebildeten Ausgestaltung, zumindest die Rahmeneinheit und zumindest die Transporteinheit zu einem Transport zumindest eines Materialstrangs, die an der Rahmeneinheit angeordnet ist, wobei die Transporteinheit zumindest eine Verdichtungseinheit zu einer Verdichtung des zumindest einen Materialstrangs umfasst, die zumindest eine Verdichtungsstreckenhauptachse aufweist, die mit einer Horizontalebene einen Winkel einschließt, der kleiner ist als 90°. Insbesondere schließt die Verdichtungsstreckenhauptachse mit der Horizontalebene einen Winkel ein, der größer ist als 0°. Bevorzugt schließt die Verdichtungsstreckenhauptachse mit der Horizontalebene einen Winkel ein, der einen Wert aus einem Wertebereich zwischen 0° und 90° aufweist. Unter einer "Verdichtungseinheit" soll hier insbesondere eine Einheit verstanden werden, die gezielt dazu vorgesehen ist, eine homogene Masse aus Herstellstoffen zur Herstellung des Materialstrangs zu erzeugen, wie beispielsweise insbesondere mittels einer Krafteinwirkung auf den Materialstrang ein Volumen des Materialstrangs zu verkleinern, insbesondere um mehr als 5%, und/oder eine Dichte des Materialstrangs zu erhöhen, insbesondere eine Dichte einer Anordnung von Inhaltsstoffen des Materialstrangs relativ zueinander, im Vergleich zu einem Volumen und einer Dichte vor der Krafteinwirkung auf den Materialstrang. Vorzugsweise ist die Verdichtungseinheit als Imprägniereinheit ausgebildet, die dazu vorgesehen ist, die Herstellstoffe des Materialstrangs mit Harz zu tränken. Bevorzugt erfolgt eine Relativbewegung von zwei Transportbändern, zwischen denen der Materialstrang in der Verdichtungseinheit angeordnet ist, um eine Imprägnierung des Materialstrangs zu realisieren. Der Begriff "Verdichtungsstreckenhauptachse" soll hier insbesondere eine Achse der Verdichtungseinheit definieren, entlang derer die Verdichtungseinheit eine maximale Erstreckung aufweist und/oder entlang derer zumindest ein Großteil, insbesondere mehr als 50 %, einer Gesamtanzahl an Wälzelementen der Verdichtungseinheit angeordnet sind. Vorzugsweise schneidet die Verdichtungsstreckenhauptachse der Verdichtungseinheit zumindest zwei Rotationsachsen von Wälzelementen der Verdichtungseinheit. Es ist jedoch auch denkbar, dass die Verdichtungsstreckenhauptachse eine von zwei abweichende Anzahl an Rotationsachsen von Wälzelementen der Verdichtungseinheit schneidet. Insbesondere ist die Verdichtungsstreckenhauptachse zumindest im Wesentlichen senkrecht zu den Rotationsachsen der Wälzelemente der Verdichtungseinheit angeordnet. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise verläuft die Horizontalebene zumindest im Wesentlichen parallel zu einer Standfläche der Rahmeneinheit und/oder einer Gehäuseeinheit der Produktionsvorrichtung. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Vorzugsweise ist die Verdichtungseinheit als Wälzeinheit ausgebildet. Unter einer "Wälzeinheit" soll hier insbesondere eine Einheit verstanden werden, die zumindest ein sich um zumindest eine Achse bewegendes, insbesondere rotierendes, Bauteil aufweist, das in wenigstens einem Betriebszustand auf einem Materialstrang direkt und/oder indirekt abwälzt und den Materialstrang unter Einwirkung einer Kraft verdichtet, insbesondere unter Einwirkung einer Kraft entlang eines linienartigen Kontaktbereichs zwischen Bauteil und Materialstrang. Unter einem "Wälzelement" soll hier ein Bauteil, insbesondere ein rotationssymmetrisches Bauteil, verstanden werden. Die Wälzelemente der Verdichtungseinheit sind vorteilhaft als Walzen ausgebildet und weisen vorzugsweise eine zylindrische Form auf. Es ist jedoch auch denkbar, dass die Wälzelemente eine andere, einem Fachmann als sinnvoll erscheinende Ausgestaltung und/oder Form aufweisen, wie beispielsweise eine Ausgestaltung als Rolle, eine tonnenförmige Form o. dgl. Unter einer "Walze" soll hier insbesondere ein Bauteil verstanden werden, dessen Längserstreckung entlang einer Rotationsachse, bezogen auf eine Abmessung, zumindest einer Erstreckung eines Durchmessers entspricht, bevorzugt jedoch zumindest eine Längserstreckung aufweist, die doppelt so groß ist, wie eine Erstreckung eines Durchmessers. Mittels der erfindungsgemäßen Ausgestaltung kann vorteilhaft in Bezug auf eine Horizontalerstreckung der Produktionsvorrichtung eine kompakte Anordnung der Verdichtungseinheit realisiert werden. Zudem kann durch eine Neigung der Verdichtungseinheit relativ zur Horizontalebene eine vorteilhafte Ausbringung von Luft aus dem Materialstrang während einer Verdichtung des Materialstrangs ermöglicht werden.

Zudem wird vorgeschlagen, dass die Produktionsvorrichtung zumindest eine Materialauftragungseinheit umfasst, die zumindest teilweise relativ zu einer Horizontalebene geneigt angeordnet ist. Es ist denkbar, dass die Produktionsvorrichtung zur Lösung der oben genannten Aufgabe in einer zusätzlichen alternativen Ausgestaltung unabhängig von der Lagereinheit ausgebildet ist. Vorzugsweise umfasst die Produktionsvorrichtung in der zusätzlichen alternativen Ausgestaltung, insbesondere in der zusätzlichen unabhängig von der Lagereinheit ausgebildeten Ausgestaltung, zumindest die Rahmeneinheit, zumindest die Transporteinheit zu einem Transport zumindest eines Materialstrangs, die an der Rahmeneinheit angeordnet ist, und zumindest die Materialauftragungseinheit umfasst, die zumindest teilweise relativ zur Horizontalebene geneigt angeordnet ist. Bevorzugt umfasst die Materialauftragungseinheit zumindest eine der Transporteinheit zugewandte Fläche, die relativ zur Horizontalebene geneigt angeordnet ist, insbesondere in einem an der Rahmeneinheit und/oder der Transporteinheit angeordneten Zustand der Materialauftragungseinheit. Die Materialauftragunseinheit ist vorzugsweise einem Transportelement, insbesondere dem Förderband, und/oder einem Trägermittel der Transporteinheit zugeordnet. Vorzugsweise werden/wird das Transportelement, insbesondere das Förderband, und/oder das Trägermittel während eines Betriebs der Produktionsvorrichtung relativ zur Materialauftragungseinheit bewegt, insbesondere darunter hinweg bewegt. Bevorzugt umfasst die Materialauftragungseinheit zumindest ein Rakelelement. Das Rakelelement weist vorzugsweise zumindest eine Abstreiffläche auf, die relativ zur Horizontalebene geneigt angeordnet ist. Die Materialauftragungseinheit ist insbesondere in einem Winkel von weniger als 30°, bevorzugt von weniger als 15° und besonders bevorzugt von weniger als 7° relativ zur Horizontalebene geneigt angeordnet. Vorzugsweise schließt die Horizontalebene und die der Transporteinheit und/oder Rahmeneinheit zugewandte Fläche einen Winkel von insbesondere kleiner als 30°, bevorzugt kleiner als 15° und besonders bevorzugt kleiner als 7° ein. Das Transportelement, insbesondere das Förderband, und/oder das Trägermittel, die/das der Materialauftragungseinheit zugeordnet sind/ist, sind/ist zumindest in einem Teilbereich des Transportelements, insbesondere des Förderbands, und/oder des Trägermittels relativ zur Horizontalebene geneigt angeordnet, insbesondere in einem Teilbereich, der unter der Materialauftragungseinheit hinwegbewegt wird und/oder auf den zumindest das Rakelelement und/oder ein Auftragraum der Materialauftragungseinheit einwirkt. Mittels der erfindungsgemäßen Ausgestaltung kann vorteilhaft eine hohe Servicefreundlichkeit der Produktionsvorrichtung erreicht werden, da insbesondere infolge einer geneigten Anordnung eine geringe Füllmenge ausreichend für eine zuverlässige Auftragung ist, so dass vorteilhaft ein Verschmutzungsgrad der Materialauftragungseinheit, insbesondere von Begrenzungswänden eines Auftragsraums der Materialauftragungseinheit, gering gehalten werden kann.

Des Weiteren wird vorgeschlagen, dass die Lagereinheit dazu vorgesehen ist, die Transporteinheit zumindest im Wesentlichen als Ganzes entlang einer zumindest im Wesentlichen quer zu einer Haupttransportrichtung der Transporteinheit verlaufenden Richtung relativ zur Rahmeneinheit beweglich zu lagern. Unter "im Wesentlichen quer" soll hier insbesondere eine Ausrichtung einer Richtung und/oder einer Achse relativ zu einer Bezugsrichtung und/oder einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist. Der Begriff "Haupttransportrichtung" soll hier insbesondere eine Richtung definieren, entlang deren der Materialstrang während einer Herstellung transportiert wird und/oder entlang derer ein Förderband der Transporteinheit während eines Betriebs bewegt wird. Vorzugsweise ist die Lagereinheit dazu vorgesehen, die Transporteinheit zumindest im Wesentlichen als Ganzes entlang einer zumindest im Wesentlichen senkrecht zur Haupttransportrichtung der Transporteinheit verlaufenden Richtung relativ zur Rahmeneinheit beweglich zu lagern. Es ist jedoch auch denkbar, dass die Transporteinheit zumindest im Wesentlichen als Ganzes mittels der Lagereinheit translatorisch und/oder rotatorisch entlang einer anderen, einem Fachmann als sinnvoll erscheinenden zumindest im Wesentlichen quer zur Haupttransportrichtung der Transporteinheit verlaufenden Richtung relativ zur Rahmeneinheit beweglich gelagert ist. Die Lagereinheit kann zu einer Bewegung der Transporteinheit zumindest im Wesentlichen als Ganzes eine Antriebseinheit, insbesondere eine elektrische Antriebseinheit, aufweisen, die mittels einer elektronischen Steuereinheit ansteuerbar ist o. dgl. Eine manuelle Bewegung der Transporteinheit zumindest im Wesentlichen als Ganzes durch einen Bediener infolge einer beweglichen Lagerung mittels der Lagereinheit ist ebenfalls denkbar. Mittels der erfindungsgemäßen Ausgestaltung kann vorteilhaft eine kompakte Ausgestaltung der Produktionsvorrichtung realisiert werden. Zudem kann vorteilhaft ein bereits vorhandener Wartungsgang in einer Produktionshalle, in der die Produktionsvorrichtung angeordnet ist, genutzt werden, um die Transporteinheit zumindest im Wesentlichen als Ganzes relativ zur Rahmeneinheit zu bewegen, insbesondere zumindest teilweise aus der Gehäuseeinheit und/oder der Rahmeneinheit heraus zu bewegen.

Ferner wird vorgeschlagen, dass die Transporteinheit zumindest eine Verdichtungseinheit zu einer Verdichtung des zumindest einen Materialstrangs umfasst, die zumindest im Wesentlichen als Ganzes mittels der Lagereinheit translatorisch entlang einer zumindest im Wesentlichen quer zu einer Haupttransportrichtung der Transporteinheit verlaufenden Richtung relativ zur Rahmeneinheit beweglich gelagert ist. Vorzugsweise ist die Verdichtungseinheit zumindest im Wesentlichen als Ganzes mittels der Lagereinheit translatorisch entlang der zumindest im Wesentlichen senkrecht zur Haupttransportrichtung der Transporteinheit verlaufenden Richtung relativ zur Rahmeneinheit beweglich gelagert. Es ist jedoch auch denkbar, dass die Verdichtungseinheit zumindest im Wesentlichen als Ganzes mittels der Lagereinheit translatorisch und/oder rotatorisch entlang einer anderen, einem Fachmann als sinnvoll erscheinenden zumindest im Wesentlichen quer zur Haupttransportrichtung der Transporteinheit verlaufenden Richtung relativ zur Rahmeneinheit beweglich gelagert ist. Mittels der erfindungsgemäßen Ausgestaltung kann vorteilhaft eine hohe Servicefreundlichkeit der Produktionsvorrichtung erreicht werden. Es kann vorteilhaft eine Bewegung zumindest der Verdichtungseinheit zumindest im Wesentlichen als Ganzes relativ zur Rahmeneinheit zu einer Wartung und/oder zu einer Reparatur ermöglicht werden.

Zudem wird vorgeschlagen, dass die Transporteinheit zumindest eine Verdichtungseinheit umfasst, die zumindest eine Verdichtungsstreckenhauptachse aufweist, und zumindest eine weitere Verdichtungseinheit, die zumindest eine Verdichtungsstreckenhauptachse aufweist, umfasst, wobei die Verdichtungsstreckenhauptachse der Verdichtungseinheit und die Verdichtungsstreckenhauptachse der weiteren Verdichtungseinheit relativ zueinander abgewinkelt angeordnet sind. Vorzugsweise sind die Verdichtungseinheit und die weitere Verdichtungseinheit entlang der Haupttransportrichtung hintereinander angeordnet. Bevorzugt schließen die Verdichtungsstreckenhauptachse der Verdichtungseinheit und die Verdichtungsstreckenhauptachse der weiteren Verdichtungseinheit einen von 180° abweichenden Winkel ein, insbesondere einen Winkel zwischen 0° und 180°. Vorzugsweise schließen die Verdichtungsstreckenhauptachse der Verdichtungseinheit und die Verdichtungsstreckenhauptachse der weiteren Verdichtungseinheit einen Winkel ein, der insbesondere kleiner ist als 170°, bevorzugt kleiner ist als 150° und besonders bevorzugt kleiner ist als 130°. Besonders bevorzugt sind die Verdichtungsstreckenhauptachse der Verdichtungseinheit und die Verdichtungsstreckenhauptachse der weiteren Verdichtungseinheit relativ zur Horizontalebene geneigt angeordnet. Es ist auch denkbar, dass die Transporteinheit eine von zwei abweichende Anzahl an Verdichtungseinheiten aufweist, die in Bezug auf ihre Verdichtungsstreckenhauptachse relativ zueinander abgewinkelt und/oder relativ zur Horizontalebene geneigt angeordnet sind. Mittels der erfindungsgemäßen Ausgestaltung kann vorteilhaft eine kompakte Ausgestaltung der Produktionsvorrichtung erreicht werden. Es kann vorteilhaft eine platzsparende Unterbringung von Verdichtungseinheiten in der Produktionsvorrichtung, insbesondere an der Rahmeneinheit und/oder in der Gehäuseeinheit, erreicht werden.

Des Weiteren wird vorgeschlagen, dass die Transporteinheit zumindest eine Verdichtungseinheit und zumindest eine weitere Verdichtungseinheit umfasst, die mittels der Lagereinheit zumindest im Wesentlichen als Ganzes relativ zur Rahmeneinheit beweglich gelagert sind. Bevorzugt sind die Verdichtungseinheit und die weitere Verdichtungseinheit zumindest im Wesentlichen als Ganzes mittels der Lagereinheit entlang der zumindest im Wesentlichen quer, insbesondere senkrecht, zur Haupttransportrichtung verlaufenden Richtung relativ zur Rahmeneinheit beweglich gelagert, insbesondere translatorisch beweglich gelagert. Mittels der erfindungsgemäßen Ausgestaltung kann vorteilhaft eine hohe Servicefreundlichkeit der Produktionsvorrichtung realisiert werden. Es können vorteilhaft die Verdichtungseinheit und die weitere Verdichtungseinheit zu einer Wartung und/oder Reparatur relativ zur Rahmeneinheit bewegt werden.

Zudem wird vorgeschlagen, dass die Produktionsvorrichtung zumindest eine Faserschneidvorrichtung, zumindest eine Materialauftragungseinheit und zumindest eine Gehäuseeinheit umfasst, in der zumindest die Transporteinheit, die zumindest eine Faserschneidvorrichtung und die zumindest eine Materialauftragungseinheit zumindest teilweise, insbesondere zu mehr als 50 %, bevorzugt zu mehr als 75 % und besonders bevorzugt vollständig, angeordnet sind. Vorzugsweise umfasst die Produktionsvorrichtung eine einzelne Faserschneidvorrichtung. Bevorzugt ist die Faserschneidvorrichtung entlang einer zumindest im Wesentlichen parallel zur Horizontalebene verlaufenden Richtung zwischen zwei Materialauftragungseinheiten der Produktionsvorrichtung angeordnet. Es ist jedoch auch denkbar, dass die Produktionsvorrichtung eine Vielzahl an Faserschneidvorrichtungen umfasst, wobei jeweils eine Faserschneidvorrichtung jeweils einer Materialauftragungsvorrichtung der Produktionsvorrichtung zugeordnet ist. Mittels der erfindungsgemäßen Ausgestaltung kann vorteilhaft eine hohe Bedienersicherheit erreicht werden, insbesondere bei einer Ausgestaltung der Produktionsvorrichtung mit einer Absaugvorrichtung. Es kann vorteilhaft eine Schutzatmosphäre um die Transporteinheit geschaffen werden, die eine Ausbreitung, insbesondere eine Ausdunstung, von gefährlichen und/oder giftigen Inhaltsstoffen des Materialstrangs in eine die Produktionsvorrichtung umgebende Umwelt vorteilhaft gering halten kann oder zum Großteil vermeiden kann.

Des Weiteren wird vorgeschlagen, dass die Produktionsvorrichtung zumindest eine Materialauftragungseinheit umfasst, die zumindest ein Rakelelement aufweist, wobei die Materialauftragungseinheit zumindest in einem Nahbereich des Rakelelements eine schiefe Ebene aufweist. Die schiefe Ebene kann von einer Bodenfläche eines Rakelkastens der Materialaufbringungseinheit oder von einer Auftragsfläche eines unter der Materialauftragungseinheit hinwegbewegbaren Transportelements und/oder Trägermittels der Transporteinheit gebildet sein. Unter einem "Nahbereich" soll hier insbesondere eine eine Einheit und/oder ein Element umgebende Punktemenge verstanden werden, wobei ein maximal von der Einheit und/oder von dem Element entferntester Punkt der Punktemenge einen maximalen Abstand zur Einheit und/oder zum Element von insbesondere weniger als 1000 mm, bevorzugt von weniger als 500 mm und besonders bevorzugt von weniger als 100 mm aufweist. Mittels der erfindungsgemäßen Ausgestaltung kann vorteilhaft eine hohe Servicefreundlichkeit der Produktionsvorrichtung erreicht werden, da insbesondere infolge einer geneigten Anordnung eine geringe Füllmenge ausreichend für eine zuverlässige Auftragung ist, so dass vorteilhaft ein Verschmutzungsgrad der Materialauftragungseinheit, insbesondere von Begrenzungswänden eines Auftragsraums der Materialauftragungseinheit, gering gehalten werden kann.

Ferner wird vorgeschlagen, dass die Produktionsvorrichtung zumindest eine Materialauftragungseinheit umfasst, die zumindest teilweise relativ zu einer Horizontalebene geneigt angeordnet ist und die zumindest eine Neigungseinstelleinheit umfasst, die zu einer Einstellung einer Neigung der Materialauftragungseinheit relativ zur Horizontalebene vorgesehen ist. Die Neigungseinstelleinheit kann manuell bedienbar oder mittels einer Steuereinheit automatisch einstellbar ausgebildet sein. Mittels der erfindungsgemäßen Ausgestaltung kann vorteilhaft ein hoher Bedienkomfort ermöglicht werden. Eine Neigung der Materialauftragungseinheit relativ zur Horizontalebene kann vorteilhaft an unterschiedlichste Produktionsparameter eingestellt werden.

Zudem wird vorgeschlagen, dass die Produktionsvorrichtung zumindest eine Materialauftragungseinheit und zumindest eine weitere Materialauftragungseinheit umfasst, die, betrachtet entlang einer zumindest im Wesentlichen parallel zu einer Horizontalebene verlaufenden Richtung, einen maximalen Abstand relativ zueinander aufweisen, der kleiner ist als 10 m. Insbesondere ist der maximale Abstand der Materialauftragungseinheit relativ zu der weiteren Materialauftragungseinheit kleiner als 9 m, bevorzugt kleiner als 7 m und besonders bevorzugt kleiner als 5 m. Vorzugsweise wird der maximale Abstand entlang einer zumindest im Wesentlichen parallel zur Horizontalebene verlaufenden Richtung gemessen. Mittels der erfindungsgemäßen Ausgestaltung kann vorteilhaft eine kompakte Ausgestaltung der Produktionsvorrichtung erreicht werden.

Ferner wird vorgeschlagen, dass die Transporteinheit zumindest eine Zusammenführungseinheit aufweist, die zumindest zwei Wälzelemente mit unterschiedlichen Durchmessern aufweist. Vorzugsweise ist die Zusammenführungseinheit entlang der Haupttransportrichtung nach der Materialauftragungseinheit und der weiteren Materialauftragungseinheit angeordnet. Mittels der erfindungsgemäßen Ausgestaltung kann vorteilhaft eine zuverlässige und komfortable Ausbringung von Luft aus dem Materialstrang während einer Zusammenführung erreicht werden.

Zudem geht die Erfindung aus von einem Verfahren zu einer Bewegung einer Transporteinheit einer Produktionsvorrichtung, gemäß dem Anspruch 11. Mittels der erfindungsgemäßen Ausgestaltung kann vorteilhaft eine hohe Servicefreundlichkeit erreicht werden. Es kann vorteilhaft in wenigen Arbeitsschritten eine Wartung und/oder Reparatur der Transporteinheit zumindest im Wesentlichen als Ganzes ermöglicht werden. Es kann vorteilhaft eine Zeitersparnis bei einer Wartung und/oder Reparatur der Transporteinheit zumindest im Wesentlichen als Ganzes erreicht werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Produktionsvorrichtung in einer schematischen Darstellung und
- Fig. 2: eine Schnittansicht der erfindungsgemäßen Produktionsvorrichtung in einer schematischen Darstellung.

### Beschreibung des Ausführungsbeispiels

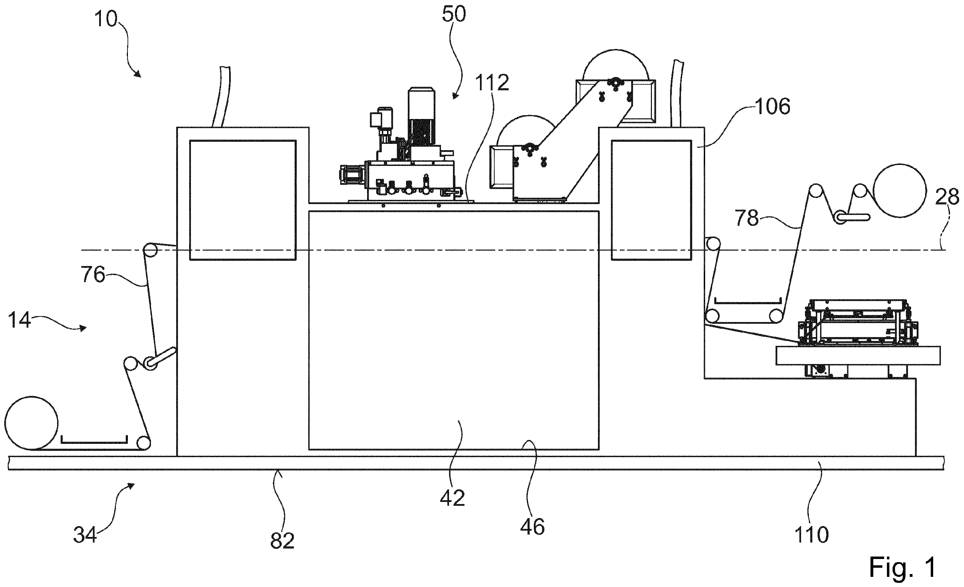

Figur 1 zeigt eine Produktionsvorrichtung 10 zu einer Herstellung von duroplastischen Halbzeugen, insbesondere von Harzmatten. Die Produktionsvorrichtung 10 ist als SMC-Produktionsvorrichtung (Sheet-Moulding-Compound-Produktionsvorrichtung) ausgebildet. Ein Materialstrang 16 zu einer Bildung der duroplastischen Halbzeuge, insbesondere der Harzmatten, wird mittels der Produktionsvorrichtung 10 auf eine, einem Fachmann bereits bekannte Art und Weise hergestellt. Der Materialstrang 16 wird insbesondere zumindest aus Fasern und einem vernetzungsfähigen Harz gebildet, wobei es denkbar ist, dass zu einer Bildung des Materialstrangs 16 zusätzlich Zusatzstoffe, wie beispielsweise Additive zur Schwundreduktion, Trennmittel, Reaktionsmittel o.dgl., genutzt werden.

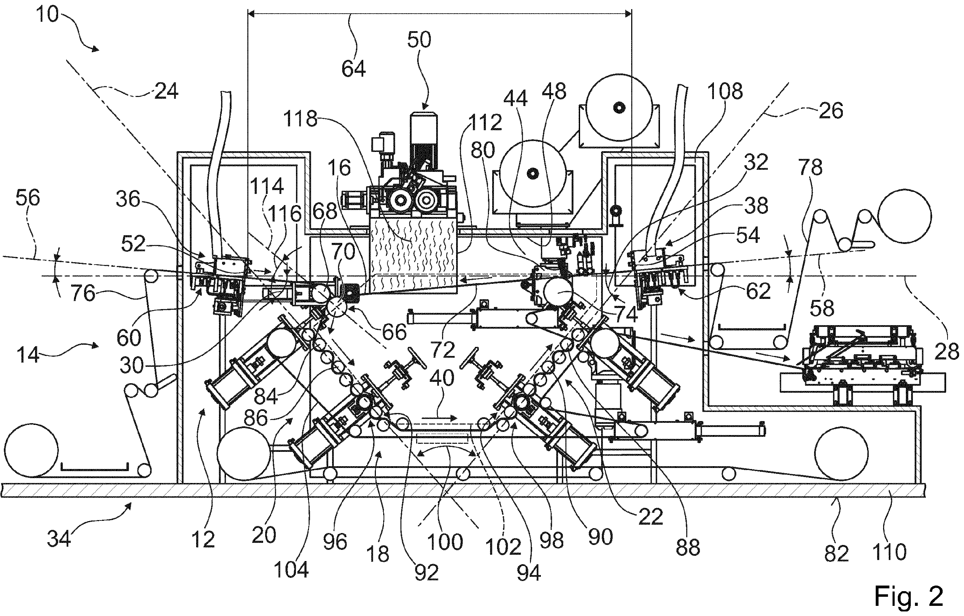

Die Produktionsvorrichtung 10 umfasst zumindest eine Rahmeneinheit 12 und zumindest eine Transporteinheit 14 zu einem Transport zumindest des Materialstrangs 16 (Figur 2). Die Transporteinheit 14 ist an der Rahmeneinheit 12 angeordnet. Insbesondere sind einzelne Elemente der Transporteinheit 14 beweglich an der Rahmeneinheit 12 gelagert. Die Rahmeneinheit 12 ist dazu vorgesehen, Gewichtskräfte von Elementen und/oder Einheiten der Produktionsvorrichtung 10 und/oder Kräfte, die bei einer Produktion von duroplastischen Halbzeugen auftreten, abzustützen. Bevorzugt ist die Rahmeneinheit 12 als Maschinenrahmen oder als Maschinengestell ausgebildet. Die Rahmeneinheit 12 kann zumindest teilweise eine Gehäuseeinheit 34 der Produktionsvorrichtung 10 bilden. Es ist jedoch auch denkbar, dass die Rahmeneinheit 12 eine andere, einem Fachmann als sinnvoll erscheinende Ausgestaltung aufweist.

Die Transporteinheit 14 umfasst zumindest ein Förderband 72 (Figur 2), das zu einer Aufnahme des Materialstrangs 16 vorgesehen ist. Das Förderband 72 ist vorzugsweise als endloses Förderband ausgebildet. Die Transporteinheit 14 umfasst ferner zumindest ein Wälzelement 74, an dem das Förderband 72 anliegt und/oder mittels dessen das Förderband 72 beweglich gelagert ist. Das Wälzelement 74 ist vorzugsweise als Transportrolle ausgebildet, an der das Förderband 72 anliegt und/oder mittels derer das Förderband 72 beweglich gelagert ist. Bevorzugt umfasst die Transporteinheit 14 eine Vielzahl an Wälzelementen 70, 74, an denen das Förderband 72 anliegt und/oder mittels denen das Förderband 72 beweglich gelagert ist. Das Förderband 72 umschlingt zumindest teilweise die Wälzelemente 70, 74. Die Wälzelemente 70, 74 können als Förderrollen, als Walzen, insbesondere als Förderwalzen, o. dgl. ausgebildet sein. Es ist jedoch auch denkbar, dass die Transporteinheit 14 alternativ oder zusätzlich andere, einem Fachmann als sinnvoll erscheinende Transportelemente aufweist, wie beispielsweise Luftkissenförderer o. dgl. Die Transporteinheit 14 kann alternativ oder zusätzlich zumindest ein Trägermittel 76, 78 aufweisen, das gezielt dazu vorgesehen ist, einzelne Komponenten des Materialstrangs 16 aufzunehmen und/oder ein Transportelement vor Verunreinigungen und/oder vor einem Ankleben des Materialstrangs 16 zu schützen. Vorzugsweise ist das Trägermittel 76, 78 als Trägerfolie ausgebildet, die insbesondere auf dem Förderband 72 anordenbar ist. Es ist jedoch auch denkbar, dass das Trägermittel 76, 78 als Trägerpulver ausgebildet ist, das auf das Transportelement, insbesondere das Förderband 72 der Transporteinheit 14, aufgetragen werden kann. Zu einem Antrieb des Förderbands 72 und/oder der Wälzelemente 70, 74 weist die Produktionsvorrichtung 10 zumindest eine Antriebseinheit 80 auf (Figur 2). Die Antriebseinheit 80 ist dazu vorgesehen, auf eine, einem Fachmann bereits bekannte Art und Weise zumindest eines der Wälzelemente 70, 74, insbesondere das Wälzelement 74, anzutreiben. Zumindest eines der Wälzelemente 70, 74, insbesondere das Wälzelement 74, ist vorzugsweise auf eine, einem Fachmann bereits bekannte Art und Weise drehfest mit einer Antriebswelle (hier nicht näher dargestellt) der Antriebseinheit 80 verbunden.

Die Produktionsvorrichtung 10 umfasst zumindest eine Lagereinheit 18, die dazu vorgesehen ist, die Transporteinheit 14 zumindest im Wesentlichen als Ganzes relativ zur Rahmeneinheit 12 beweglich zu lagern (Figur 2). Vorzugsweise ist die Lagereinheit 18 dazu vorgesehen, zumindest das Förderband 72 der Transporteinheit 14 und zumindest eines der Wälzelemente 70, 74 der Transporteinheit 14, mittels dessen das Förderband 72 beweglich gelagert und/oder geführt ist, gemeinsam relativ zur Rahmeneinheit 12 beweglich zu lagern. Besonders bevorzugt ist die Lagereinheit 18 dazu vorgesehen, zumindest das Förderband 72 der Transporteinheit 14 und eine Vielzahl an Wälzelementen 70, 74 der Transporteinheit 14, mittels denen das Förderband 72 beweglich gelagert und/oder geführt ist, gemeinsam relativ zur Rahmeneinheit 12 beweglich zu lagern. Vorzugsweise sind das Förderband 72 der Transporteinheit 14 und zumindest eines der Wälzelemente 70, 74 der Transporteinheit 14, mittels denen das Förderband 72 beweglich gelagert und/oder geführt ist, gemeinsam an einer Gestelleinheit 102 (in Figur 2 lediglich gestrichelt dargestellt) der Lagereinheit 18 angeordnet. Insbesondere sind das Förderband 72 der Transporteinheit 14 und eine Vielzahl an Wälzelementen 70, 74 der Transporteinheit 14, mittels denen das Förderband 72 beweglich gelagert und/oder geführt ist, gemeinsam an der Gestelleinheit 102 der Lagereinheit 18 angeordnet. Die Gestelleinheit 102 ist relativ zur Rahmeneinheit 12 beweglich gelagert, insbesondere translatorisch beweglich gelagert. Die Transporteinheit 14 kann zumindest im Wesentlichen als Ganzes mittels der Lagereinheit 18 translatorisch und/oder rotatorisch relativ zur Rahmeneinheit 12 beweglich gelagert sein. Die Lagereinheit 18 kann als Linearlagereinheit, als Rotationslagereinheit, als Schwenklagereinheit oder als Kombination aus einer Linear-, Rotations- und Schwenklagereinheit ausgebildet sein. In dem in den Figuren 1 und 2 dargestellten Ausführungsbeispiel ist die Lagereinheit 18 als Linearlagereinheit ausgebildet. Die Lagereinheit 18 ist dazu vorgesehen, die Transporteinheit 14 zumindest im Wesentlichen als Ganzes entlang einer zumindest im Wesentlichen quer zu einer Haupttransportrichtung 40 der Transporteinheit 14 verlaufenden Richtung relativ zur Rahmeneinheit 12 beweglich zu lagern. Die Lagereinheit 18 ist vorzugsweise dazu vorgesehen, die Transporteinheit 14 zumindest im Wesentlichen als Ganzes entlang einer zumindest im Wesentlichen quer zu einer Haupttransportrichtung 40 der Transporteinheit 14 verlaufenden Richtung translatorisch relativ zur Rahmeneinheit 12 beweglich zu lagern. Die Lagereinheit 18 ist dazu vorgesehen, die Transporteinheit 14 zumindest im Wesentlichen als Ganzes entlang einer zumindest im Wesentlichen parallel zu einer Horizontalebene 28 der Produktionsvorrichtung 10 verlaufenden Richtung relativ zur Rahmeneinheit 12 beweglich zu lagern, insbesondere translatorisch beweglich zu lagern. Die Lagereinheit 18 ist bevorzugt dazu vorgesehen, die Transporteinheit 14 zumindest im Wesentlichen als Ganzes entlang einer zumindest im Wesentlichen senkrecht zu einer Haupttransportrichtung 40 der Transporteinheit 14 verlaufenden Richtung translatorisch relativ zur Rahmeneinheit 12 beweglich zu lagern.

Die Transporteinheit 14 umfasst zumindest eine Verdichtungseinheit 20, 22 zu einer Verdichtung des zumindest einen Materialstrangs 16, die zumindest eine Verdichtungsstreckenhauptachse 24, 26 aufweist, die mit der Horizontalebene 28 einen Winkel 30, 32 einschließt, der kleiner ist als 90°. Die Horizontalebene 28 verläuft insbesondere zumindest im Wesentlichen parallel zu einer Standfläche 82 der Rahmeneinheit 12 und/oder der Gehäuseeinheit 34. Die Verdichtungseinheit 20, 22 ist gezielt dazu vorgesehen, mittels einer Krafteinwirkung auf den Materialstrang 16 ein Volumen des Materialstrangs 16 zu verkleinern, insbesondere um mehr als 5%, und/oder eine Dichte des Materialstrangs 16 zu erhöhen, insbesondere eine Dichte einer Anordnung von Inhaltsstoffen des Materialstrangs 16 relativ zueinander, im Vergleich zu einem Volumen und einer Dichte vor der Krafteinwirkung auf den Materialstrang 16. Vorzugsweise schneidet die Verdichtungsstreckenhauptachse 24, 26 der Verdichtungseinheit 20, 22 zumindest zwei Rotationsachsen von Wälzelementen 84, 86, 88, 90 der Verdichtungseinheit 20, 22. Es ist jedoch auch denkbar, dass die Verdichtungsstreckenhauptachse 24, 26 eine von zwei abweichende Anzahl an Rotationsachsen von Wälzelementen 84, 86, 88, 90 der Verdichtungseinheit 20, 22 schneidet. Vorzugsweise ist die Verdichtungseinheit 20, 22 als Wälzeinheit ausgebildet. Die Wälzelemente 84, 86, 88, 90 der Verdichtungseinheit 20, 22 sind vorteilhaft als Walzen ausgebildet und weisen vorzugsweise eine zylindrische Form auf. Es ist jedoch auch denkbar, dass die Wälzelemente 84, 86, 88, 90 eine andere, einem Fachmann als sinnvoll erscheinende Ausgestaltung und/oder Form aufweisen, wie beispielsweise eine Ausgestaltung als Walze mit einer tonnenförmigen Form o. dgl. Die Wälzelemente 84, 86, 88, 90 der Verdichtungseinheit 20, 22 sind vorzugsweise in einer Reihe angeordnet. Insbesondere weist die Verdichtungseinheit 20, 22 eine innere Reihe 92, 94 an Wälzelementen 84, 86, 88, 90 der Verdichtungseinheit 20, 22 und eine äußere Reihe 96, 98 an Wälzelementen der Verdichtungseinheit 20, 22 auf. Die innere Reihe 92, 94 an Wälzelementen 84, 86, 88, 90 der Verdichtungseinheit 20, 22 und die äußere Reihe 96, 98 an Wälzelementen der Verdichtungseinheit 20, 22 sind in zumindest einem Zustand, insbesondere in einem in der Gehäuseeinheit 34 angeordneten Zustand der Verdichtungseinheit 20, 22, dazu vorgesehen, derart miteinander zusammenzuwirken, dass der Materialstrang 16, insbesondere zumindest zusammen mit dem Förderband 72, mäanderförmig durch die Verdichtungseinheit 20, 22 bewegt wird. Das Förderband 72 umschlingt zumindest teilweise die Wälzelemente 70, 74 der Transporteinheit 14 und die Wälzelemente 84, 86, 88, 90 der Verdichtungseinheit 20, 22, die die innere Reihe 92, 94 an Wälzelemente 84, 86, 88, 90 der Verdichtungseinheit 20, 22 bilden. Die Transporteinheit 14 umfasst zumindest ein weiteres Förderband 104 das zumindest im Bereich der Verdichtungseinheit 20, 22 mit dem Förderband 72 zusammenwirkt, um den Materialstrang 16 bei einem Durchlaufen der Verdichtungseinheit 20, 22 zu verdichten. Das weitere Förderband 104 umschlingt zumindest teilweise zumindest die äußere Reihe 96, 98 an Wälzelementen der Verdichtungseinheit 20, 22. Der Materialstrang 16 ist auf eine, einem Fachmann bereits bekannte Art und Weise zumindest im Bereich der Verdichtungseinheit 20, 22 zwischen dem Förderband 72 und dem weiteren Förderband 104 angeordnet.

Die Transporteinheit 14 umfasst zumindest die Verdichtungseinheit 20, die zumindest die Verdichtungsstreckenhauptachse 24 aufweist, und zumindest eine weitere Verdichtungseinheit 22, die zumindest eine Verdichtungsstreckenhauptachse 26 aufweist, wobei die Verdichtungsstreckenhauptachse 24 der Verdichtungseinheit 20 und die Verdichtungsstreckenhauptachse 26 der weiteren Verdichtungseinheit 22 relativ zueinander abgewinkelt angeordnet sind. Bevorzugt schließen die Verdichtungsstreckenhauptachse 24 der Verdichtungseinheit 20 und die Verdichtungsstreckenhauptachse 26 der weiteren Verdichtungseinheit 22 einen von 180° abweichenden Winkel 100 ein, insbesondere einen Winkel 100 zwischen 0° und 180°. Die Verdichtungsstreckenhauptachse 24 der Verdichtungseinheit 20 und die Verdichtungsstreckenhauptachse 26 der weiteren Verdichtungseinheit 22 sind vorzugsweise entlang der Haupttransportrichtung 40 hintereinander angeordnet.

Die Transporteinheit 14 umfasst zumindest die Verdichtungseinheit 20, 22 zu einer Verdichtung des zumindest einen Materialstrangs 16, die zumindest im Wesentlichen als Ganzes mittels der Lagereinheit 18 translatorisch entlang einer zumindest im Wesentlichen quer zur Haupttransportrichtung 40 der Transporteinheit 14 verlaufenden Richtung relativ zur Rahmeneinheit 12 beweglich gelagert ist. Die Verdichtungseinheit 20, 22 ist mittels der Lagereinheit 18 insbesondere translatorisch entlang einer zumindest im Wesentlichen senkrecht zur Haupttransportrichtung 40 der Transporteinheit 14 verlaufenden Richtung relativ zur Rahmeneinheit 12 beweglich gelagert. Die Verdichtungseinheit 20, 22 ist mittels der Lagereinheit 18 insbesondere translatorisch entlang einer zumindest im Wesentlichen parallel zur Horizontalebene 28 der Produktionsvorrichtung 10 verlaufenden Richtung relativ zur Rahmeneinheit 12 beweglich gelagert. Zumindest die innere Reihe 92, 94 an Wälzelementen 84, 86, 88, 90 der Verdichtungseinheit 22 und/oder der weiteren Verdichtungseinheit 22 sind/ist mittels der Lagereinheit 18 translatorisch entlang einer zumindest im Wesentlichen quer zur Haupttransportrichtung 40 der Transporteinheit 14 verlaufenden Richtung relativ zur Rahmeneinheit 12 beweglich gelagert. Die innere Reihe 92, 94 an Wälzelementen 84, 86, 88, 90 der Verdichtungseinheit 20 und/oder der weiteren Verdichtungseinheit 22 sind/ist an der Gestelleinheit 102 der Lagereinheit 18 angeordnet, die entlang einer zumindest im Wesentlichen quer zur Haupttransportrichtung 40 der Transporteinheit 14 verlaufenden Richtung relativ zur Rahmeneinheit 12 beweglich gelagert ist.

Die Transporteinheit 14 umfasst zumindest die Verdichtungseinheit 20 und zumindest die weitere Verdichtungseinheit 22, die mittels der Lagereinheit 18 zumindest im Wesentlichen als Ganzes relativ zur Rahmeneinheit 12 beweglich gelagert sind. Zumindest die innere Reihe 92 an Wälzelementen 84, 86 der Verdichtungseinheit 20 sowie die innere Reihe 94 an Wälzelementen 88, 90 der weiteren Verdichtungseinheit 22 sind mittels der Lagereinheit 18 relativ zur Rahmeneinheit 12 beweglich gelagert. Die innere Reihe 92 an Wälzelementen 84, 86 der Verdichtungseinheit 20 sowie die innere Reihe 94 an Wälzelementen 88, 90 der weiteren Verdichtungseinheit 22 ist an der Gestelleinheit 102 angeordnet.

Die Produktionsvorrichtung 10 weist zumindest die Gehäuseeinheit 34 auf, die in zumindest einem Zustand zumindest teilweise zumindest die Transporteinheit 14 zumindest im Wesentlichen als Ganzes umschließt. Die Transporteinheit 14 ist zumindest im Wesentlichen als Ganzes innerhalb der Gehäuseeinheit 34 angeordnet. Betrachtet in einer zumindest im Wesentlichen senkrecht zur Horizontalebene 28 verlaufenden Ebene, umgibt die Gehäuseeinheit 34 die Transporteinheit 14 zumindest im Wesentlichen als Ganzes entlang zumindest drei Seiten, vorzugsweise entlang zumindest vier Seiten. Die Gehäuseeinheit 34 weist insbesondere eine Bodenplatte 110 auf. Die Rahmeneinheit 12 ist insbesondere an der Bodenplatte 110 angeordnet. Es ist jedoch auch denkbar, dass die Gehäuseeinheit 34 unabhängig von der Bodenplatte 110 ausgebildet ist und die Gehäuseeinheit 34 auf einer, einem Untergrund zugewandten Seite der Gehäuseeinheit 34 offen ausgebildet ist. Es ist denkbar, dass die Produktionsvorrichtung 10 eine Absaugvorrichtung umfasst, die dazu vorgesehen ist, insbesondere gasförmige Fluide aus einem Innenraum der Gehäuseeinheit 34 abzusaugen.

Die Produktionsvorrichtung 10 umfasst zumindest die Gehäuseeinheit 34, die zumindest ein bewegbares und/oder abnehmbares Verschlusselement 42, 44 aufweist, das zumindest zu einem Verschließen zumindest einer Öffnung 46, 48 vorgesehen ist, durch die zumindest die Transporteinheit 14 mittels der Lagereinheit 18 zumindest im Wesentlichen als Ganzes relativ zur Rahmeneinheit 12 zumindest teilweise aus der Gehäuseeinheit 34 heraus bewegbar ist. Die Öffnung 46, 48 ist vorzugsweise in einer Seitenwand 106, 108 der Gehäuseeinheit 34 angeordnet. Vorzugsweise weist die Gehäuseeinheit 34 zumindest zwei Verschlusselemente 42, 44 auf, die zumindest zu einem Verschließen jeweils zumindest einer Öffnung 46, 48 vorgesehen sind. Es ist jedoch auch denkbar, dass die Gehäuseeinheit 34 eine von zwei abweichende Anzahl an Verschlusselementen 42, 44 aufweist, die zumindest zu einem Verschließen jeweils zumindest einer Öffnung 46, 48 vorgesehen sind. Die Verschlusselemente 42, 44 können zumindest teilweise transparent, vollständig transparent oder vollständig intransparent ausgebildet sein. Vorzugsweise sind die Verschlusselemente 42, 44 als Servicetüren der Gehäuseeinheit 34 ausgebildet. Es ist jedoch auch denkbar, dass die Verschlusselemente 42, 44 eine andere, einem Fachmann als sinnvoll erscheinende Ausgestaltung aufweisen.

Die Produktionsvorrichtung 10 umfasst zumindest eine Faserschneidvorrichtung 50, zumindest eine Materialauftragungseinheit 36, 38, insbesondere zumindest zwei Materialauftragungseinheiten 36, 38, und zumindest die Gehäuseeinheit 34, in der zumindest die Transporteinheit 14, die zumindest eine Faserschneidvorrichtung 50 und die zumindest eine Materialauftragungseinheit 36, 38, insbesondere die zumindest zwei Materialauftragungseinheiten 36, 38, zumindest teilweise, insbesondere zumindest im Wesentlichen als Ganzes, angeordnet sind. Bevorzugt sind zumindest die Materialauftragungseinheit 36, 38 und die Transporteinheit 14 zumindest im Wesentlichen als Ganzes, insbesondere vollständig, in der Gehäuseeinheit 34 angeordnet. Die Faserschneidvorrichtung 50 umfasst zumindest ein Faserzuführelement 112, das zumindest im Wesentlichen als Ganzes in der Gehäuseeinheit 34 angeordnet ist. Die Faserschneidvorrichtung 50 weist insbesondere eine, einem Fachmann bereits bekannte Ausgestaltung auf, wie diese beispielsweise in DE 102007052587 A1, in DE 102010045702 A1, in DE 102010018485 A1 o. dgl. offenbart ist.

Die Produktionsvorrichtung 10 umfasst zumindest die Materialauftragungseinheit 36, 38, die zumindest teilweise relativ zur Horizontalebene 28 geneigt angeordnet ist. Die Materialauftragungseinheit 36, 38 ist insbesondere in einem Winkel 30, 32 von weniger als 30°, bevorzugt von weniger als 15° und besonders bevorzugt von weniger als 7° relativ zur Horizontalebene 28 geneigt angeordnet. Vorzugsweise schließt die Horizontalebene 28 und eine der Transporteinheit 14 und/oder der Rahmeneinheit 12 zugewandte Fläche der Materialauftragungseinheit 36, 38, insbesondere eines Rakelkastens der Materialauftragungseinheit 36, 38 einen Winkel 30, 32 von insbesondere kleiner als 30°, bevorzugt kleiner als 15° und besonders bevorzugt kleiner als 7° ein. Das Förderband 72 und/oder das Trägermittel 76, 78, das der Materialauftragungseinheit 36, 38 zugeordnet sind/ist, sind/ist zumindest in einem Teilbereich des Förderbands 72 und/oder des Trägermittels 76, 78 relativ zur Horizontalebene 28 geneigt angeordnet, insbesondere in einem Teilbereich, der unter der Materialauftragungseinheit 36, 38 hinwegbewegt wird.

Die zumindest eine Materialauftragungseinheit 36, 38 umfasst zumindest ein Rakelelement 52, 54 (Figur 2), wobei die Materialauftragungseinheit 36, 38 zumindest in einem Nahbereich des Rakelelements 52, 54 eine schiefe Ebene 56, 58 aufweist. Vorzugsweise schließen die schiefe Ebene 56, 58 der Materialauftragungseinheit 36, 38 und die Horizontalebene einen Winkel kleiner als 45° ein, insbesondere einen Winkel zwischen 0,1° und 44,9°, bevorzugt einen Winkel zwischen 0,1° und 10° und besonders bevorzugt einen Winkel zwischen 0,1° und 6°. Insbesondere weist die Produktionsvorrichtung 10 zumindest die Materialauftragungseinheit 36 und zumindest eine weitere Materialauftragungseinheit 38 auf. Die Materialauftragungseinheit 36 und/oder die zumindest eine weitere Materialauftragungseinheit 38 sind/ist zumindest teilweise relativ zur Horizontalebene 28 geneigt angeordnet. Insgesamt weist die Produktionsvorrichtung 10 zumindest zwei Materialauftragungseinheiten 36, 38 auf. Es ist jedoch auch denkbar, dass die Produktionsvorrichtung 10 eine von zwei abweichende Anzahl an Materialauftragungseinheiten 36, 38 aufweist. Die Faserschneidvorrichtung 50, insbesondere zumindest das Faserzuführelement 112, ist, betrachtet entlang der Haupttransportrichtung 40 zwischen der Materialauftragungseinheit 36 und der weiteren Materialauftragungseinheit 38 angeordnet. Die Produktionsvorrichtung 10 umfasst insbesondere zumindest eine einzelne Faserschneidvorrichtung 50, die dazu vorgesehen ist, geschnittene Fasern 118 zuzuführen (Figur 2). Mittels der Materialauftragungseinheit 36 und der weiteren Materialauftragungseinheit 38 ist zu einer Herstellung des Materialstrangs 16 auf eine, einem Fachmann bereits bekannte Art und Weise dem Förderband 72 und/oder dem Trägermittel 76, 78 zumindest ein Harz zuführbar und/oder auf das Förderband 72 und/oder auf das Trägermittel 76, 78 aufbringbar. Die Faserschneidvorrichtung 50 ist auf eine, einem Fachmann bereits bekannte Art und Weise dazu vorgesehen, dem auf das Förderband 72 und/oder auf das Trägermittel 76, 78 aufgetragene Harz geschnittene Fasern 118 zuzuführen, insbesondere zur Bildung des Materialstrangs 16.

Die Produktionsvorrichtung 10 umfasst zumindest die Materialauftragungseinheit 36, 38, die zumindest teilweise relativ zur Horizontalebene 28 geneigt angeordnet ist und die zumindest eine Neigungseinstelleinheit 60, 62 umfasst, die zu einer Einstellung einer Neigung der Materialauftragungseinheit 36, 38 relativ zur Horizontalebene 28 vorgesehen ist (Figur 2). Die Materialauftragungseinheit 36 umfasst zumindest eine Neigungseinstelleinheit 60, die zu einer Einstellung einer Neigung der Materialauftragungseinheit 36 relativ zur Horizontalebene 28 vorgesehen ist. Die weitere Materialauftragungseinheit 38 umfasst zumindest eine Neigungseinstelleinheit 62, die zu einer Einstellung einer Neigung der weiteren Materialauftragungseinheit 38 relativ zur Horizontalebene 28 vorgesehen ist. Es ist jedoch auch denkbar, dass die Produktionsvorrichtung 10 eine zentrale Neigungseinstelleinheit aufweist, die zu einer Einstellung einer Neigung der Materialauftragungseinheit 36 und der weiteren Materialauftragungseinheit 38 relativ zur Horizontalebene 28 vorgesehen ist.

Die Produktionsvorrichtung 10 umfasst zumindest die Materialauftragungseinheit 36 und zumindest die weitere Materialauftragungseinheit 38, die, betrachtet entlang einer zumindest im Wesentlichen parallel zur Horizontalebene 28 verlaufenden Richtung, einen maximalen Abstand 64 relativ zueinander aufweisen, der kleiner ist als 10 m. Vorzugsweise ist der maximale Abstand 64 zwischen der Materialauftragungseinheit 36 und der weiteren Materialauftragungseinheit 38 kleiner als 8 m, besonders bevorzugt kleiner als 4 m.

Die Transporteinheit 14 weist zumindest eine Zusammenführungseinheit 66 auf, die zumindest zwei Wälzelemente 68, 70 mit unterschiedlichen Durchmessern aufweist. Die Zusammenführungseinheit 66 ist, betrachtet entlang der Haupttransportrichtung 40, nach der Materialauftragungseinheit 36 und der weiteren Materialauftragungseinheit 38 angeordnet. Die Zusammenführungseinheit 66 ist dazu vorgesehen, das Förderband 72 und das Trägermittel 76, 78 oder zwei Trägermittel 76, 78, auf denen das Harz oder das Harz und die geschnittenen Fasern aufgetragen sind, zusammenzuführen. Die Zusammenführungseinheit 66 weist eine Achse 114 auf, die Rotationsachsen der Wälzelemente 68, 70 der Zusammenführungseinheit 66 schneidet. Die Achse 114 verläuft zumindest im Wesentlichen senkrecht zu den Rotationsachsen der Wälzelemente 68, 70 der Zusammenführungseinheit 66. Die Achse 114 schließt mit der Horizontalebene 28 einen Winkel 116 ein, der von 90° und von 180° verschieden ist. Die Achse 114 schließt mit der Horizontalebene 28 einen Winkel 116 ein, der insbesondere kleiner ist als 90°, bevorzugt kleiner ist als 70° und besonders bevorzugt kleiner ist als 50°.

Im Folgenden wird ein Verfahren zu einer Bewegung der Transporteinheit 14 der Produktionsvorrichtung 10 relativ zur Rahmeneinheit 12 der Produktionsvorrichtung 10 beschrieben. In zumindest einem Verfahrensschritt wird zumindest eine Spannung des Förderbands 72 und/oder des weiteren Förderbands 104 gelöst, insbesondere infolge eines Einfahrens eines Spannzylinders der Transporteinheit 14. In zumindest einem Verfahrensschritt wird die äußere Reihe 96, 98 an Wälzelementen der Verdichtungseinheit 20 und der weiteren Verdichtungseinheit 22 relativ zur inneren Reihe 92, 94 an Wälzelementen 84, 86, 88, 90 der Verdichtungseinheit 20 und der weiteren Verdichtungseinheit 22 bewegt, insbesondere infolge eines Einfahrens von Hubzylindern der Transporteinheit 14, die den äußeren Reihen 96, 98 an Wälzelementen der Verdichtungseinheit 20 und der weiteren Verdichtungseinheit 22 zugeordnet sind. In zumindest einem Verfahrensschritt wird die Transporteinheit 14 zumindest im Wesentlichen als Ganzes relativ zur Rahmeneinheit 12 bewegt. Es wird in zumindest einem Verfahrensschritt die Gestelleinheit 102 relativ zur Rahmeneinheit 12 bewegt. Es ist jedoch auch denkbar, dass die innere Reihe 92, 94 an Wälzelementen 84, 86, 88, 90 der Verdichtungseinheit 20 und der weiteren Verdichtungseinheit 22 und die äußere Reihe 96, 98 an Wälzelementen der Verdichtungseinheit 20 und der weiteren Verdichtungseinheit 22 an der Gestelleinheit 102 angeordnet sind und gemeinsam infolge einer Bewegung der Gestelleinheit 102 relativ zur Rahmeneinheit 12 relativ zur Rahmeneinheit 12 bewegt werden. Hinsichtlich weiterer Verfahrensschritte des Verfahrens zu einer Bewegung der Transporteinheit 14 der Produktionsvorrichtung 10 relativ zur Rahmeneinheit 12 der Produktionsvorrichtung 10 darf auf die vorhergehende Beschreibung der Produktionsvorrichtung 10 verwiesen werden, da diese Beschreibung analog auch auf das Verfahren zu lesen ist und somit alle Merkmale hinsichtlich der Produktionsvorrichtung 10 auch in Bezug auf das Verfahren zu einer Bewegung der Transporteinheit 14 der Produktionsvorrichtung 10 relativ zur Rahmeneinheit 12 der Produktionsvorrichtung 10 als offenbart gelten.

### Bezugszeichen

- 10: Produktionsvorrichtung
- 12: Rahmeneinheit
- 14: Transporteinheit
- 16: Materialstrang
- 18: Lagereinheit
- 20: Verdichtungseinheit
- 22: Verdichtungseinheit
- 24: Verdichtungsstreckenhauptachse
- 26: Verdichtungsstreckenhauptachse
- 28: Horizontalebene
- 30: Winkel
- 32: Winkel
- 34: Gehäuseeinheit
- 36: Materialauftragungseinheit
- 38: Materialauftragungseinheit
- 40: Haupttransportrichtung
- 42: Verschlusselement
- 44: Verschlusselement
- 46: Öffnung
- 48: Öffnung
- 50: Faserschneidvorrichtung
- 52: Rakelelement
- 54: Rakelelement
- 56: schiefe Ebene
- 58: schiefe Ebene
- 60: Neigungseinstelleinheit
- 62: Neigungseinstelleinheit
- 64: Abstand
- 66: Zusammenführungseinheit
- 68: Wälzelement
- 70: Wälzelement
- 72: Förderband
- 74: Wälzelement
- 76: Trägermittel
- 78: Trägermittel
- 80: Antriebseinheit
- 82: Standfläche
- 84: Wälzelement
- 86: Wälzelement
- 88: Wälzelement
- 90: Wälzelement
- 92: Reihe
- 94: Reihe
- 96: Reihe
- 98: Reihe
- 100: Winkel
- 102: Gestelleinheit
- 104: Förderband
- 106: Seitenwand
- 108: Seitenwand
- 110: Bodenplatte
- 112: Faserzuführelement
- 114: Achse
- 116: Winkel
- 118: Faser

## Patentansprüche

1. Produktionsvorrichtung, insbesondere SMC-Produktionsvorrichtung, zu einer Herstellung von duroplastischen Halbzeugen, mit zumindest einer Rahmeneinheit (12), mit zumindest einer Transporteinheit (14) zu einem Transport zumindest eines Materialstrangs (16), die an der Rahmeneinheit (12) angeordnet ist, wobei die Transporteinheit (14) zumindest ein Förderband (72), das zu einer Aufnahme des Materialstrangs (16) vorgesehen ist, und eine Vielzahl an Wälzelementen (70, 74) umfasst, an denen das Förderband (72) der Transporteinheit (14) anliegt und/oder mittels derer das Förderband (72) der Transporteinheit (14) beweglich gelagert ist, und mit zumindest eine Lagereinheit (18), die dazu vorgesehen ist, die Transporteinheit (14) zumindest im Wesentlichen als Ganzes, d.h. mehr als 50%, relativ zur Rahmeneinheit (12) beweglich zu lagern, wobei das Förderband (72) und die Vielzahl an Wälzelementen (70, 74), mittels deren das Förderband (72) beweglich gelagert und/oder geführt ist, gemeinsam an einer Gestelleinheit (102) der Lagereinheit (18) angeordnet sind, wobei die Gestelleinheit (102) relativ zur Rahmeneinheit (12) beweglich gelagert ist, insbesondere translatorisch beweglich gelagert ist, **gekennzeichnet durch** zumindest eine Gehäuseeinheit (34), die in zumindest einem Zustand zumindest teilweise zumindest die Transporteinheit (14) zumindest im Wesentlichen als Ganzes umschließt, wobei die Gehäuseeinheit (34) zumindest ein bewegbares und/oder abnehmbares Verschlusselement (42, 44) aufweist, das zumindest zu einem Verschließen zumindest einer Öffnung (46, 48) vorgesehen ist, durch die zumindest die Transporteinheit (14) mittels der Lagereinheit (18) zumindest im Wesentlichen als Ganzes relativ zur Rahmeneinheit (12) zumindest teilweise aus der Gehäuseeinheit (34) heraus bewegbar ist.

2. Produktionsvorrichtung nach einem der vorhergehenden Ansprüche, **dadurch gekennzeichnet, dass** die Lagereinheit (18) dazu vorgesehen ist, die Transporteinheit (14) zumindest im Wesentlichen als Ganzes entlang einer zumindest im Wesentlichen quer zu einer Haupttransportrichtung (40) der Transporteinheit (14) verlaufenden Richtung relativ zur Rahmeneinheit (12) beweglich zu lagern.

3. Produktionsvorrichtung nach einem der vorhergehenden Ansprüche, **dadurch gekennzeichnet, dass** die Transporteinheit (14) zumindest eine Verdichtungseinheit (20, 22) zu einer Verdichtung des zumindest einen Materialstrangs (16) umfasst, die zumindest im Wesentlichen als Ganzes mittels der Lagereinheit (18) translatorisch entlang einer zumindest im Wesentlichen quer zu einer Haupttransportrichtung (40) der Transporteinheit (14) verlaufenden Richtung relativ zur Rahmeneinheit (12) beweglich gelagert ist.

4. Produktionsvorrichtung nach einem der vorhergehenden Ansprüche, **dadurch gekennzeichnet, dass** die Transporteinheit (14) zumindest eine Verdichtungseinheit (20), die zumindest eine Verdichtungsstreckenhauptachse (24) aufweist, und zumindest eine weitere Verdichtungseinheit (22), die zumindest eine Verdichtungsstreckenhauptachse (26) aufweist, umfasst, wobei die Verdichtungsstreckenhauptachse (24) der Verdichtungseinheit (20) und die Verdichtungsstreckenhauptachse (26) der weiteren Verdichtungseinheit (22) relativ zueinander abgewinkelt angeordnet sind.

5. Produktionsvorrichtung nach einem der vorhergehenden Ansprüche, **dadurch gekennzeichnet, dass** die Transporteinheit (14) zumindest eine Verdichtungseinheit (20) und zumindest eine weitere Verdichtungseinheit (22) umfasst, die mittels der Lagereinheit (18) zumindest im Wesentlichen als Ganzes relativ zur Rahmeneinheit (12) beweglich gelagert sind.

6. Produktionsvorrichtung nach einem der vorhergehenden Ansprüche, **gekennzeichnet durch** zumindest eine Faserschneidvorrichtung (50), zumindest eine Materialauftragungseinheit (36, 38) und zumindest eine Gehäuseeinheit (34), in der zumindest die Transporteinheit (14), die zumindest eine Faserschneidvorrichtung (50) und die zumindest eine Materialauftragungseinheit (36, 38) zumindest teilweise angeordnet sind.

7. Produktionsvorrichtung nach einem der vorhergehenden Ansprüche, **gekennzeichnet durch** zumindest eine Materialauftragungseinheit (36, 38), die zumindest ein Rakelelement (52, 54) aufweist, wobei die Materialauftragungseinheit (36, 38) zumindest in einem Nahbereich des Rakelelements (52, 54) eine schiefe Ebene (56, 58) aufweist.

8. Produktionsvorrichtung nach einem der vorhergehenden Ansprüche, **gekennzeichnet durch** zumindest eine Materialauftragungseinheit (36, 38), die zumindest teilweise relativ zu einer Horizontalebene (28) geneigt angeordnet ist und die zumindest eine Neigungseinstelleinheit (60, 62) umfasst, die zu einer Einstellung einer Neigung der Materialauftragungseinheit (36, 38) relativ zur Horizontalebene (28) vorgesehen ist.

9. Produktionsvorrichtung nach einem der vorhergehenden Ansprüche, **gekennzeichnet durch** zumindest eine Materialauftragungseinheit (36) und zumindest eine weitere Materialauftragungseinheit (38), die, betrachtet entlang einer zumindest im Wesentlichen parallel zu einer Horizontalebene (28) verlaufenden Richtung, einen maximalen Abstand (64) relativ zueinander aufweisen, der kleiner ist als 10m.

10. Produktionsvorrichtung nach einem der vorhergehenden Ansprüche, **dadurch gekennzeichnet, dass** die Transporteinheit (14) zumindest eine Zusammenführungseinheit (66) aufweist, die zumindest zwei Wälzelemente (68, 70) mit unterschiedlichen Durchmessern aufweist.

11. Verfahren zu einer Bewegung einer Transporteinheit (14) einer Produktionsvorrichtung, insbesondere der Produktionsvorrichtung nach einem der vorhergehenden Ansprüche, relativ zu einer Rahmeneinheit (12) der Produktionsvorrichtung, wobei in zumindest einem Verfahrensschritt eine an einer Gestelleinheit (102) der Produktionsvorrichtung angeordnete innere Reihe (92, 94) an Wälzelementen (84, 86, 88, 90) einer Verdichtungseinheit (20) der Transporteinheit (14) und einer weiteren Verdichtungseinheit (22) der Transporteinheit (14) und/oder eine an der Gestelleinheit (102) angeordnete äußere Reihe (96, 98) an Wälzelementen der Verdichtungseinheit (20) und der weiteren Verdichtungseinheit (22) gemeinsam infolge einer Bewegung der Gestelleinheit (102) relativ zur Rahmeneinheit (12) bewegt werden, wobei in zumindest einem Verfahrensschritt die Transporteinheit (14) zumindest im Wesentlichen als Ganzes , d.h. mehr als 50%, relativ zur Rahmeneinheit (12) bewegt wird, **dadurch gekennzeichnet, dass** in zumindest einem Verfahrensschritt die Transporteinheit (14) zumindest im Wesentlichen als Ganzes mittels der Lagereinheit (18) entlang einer zumindest im Wesentlichen quer zu einer Haupttransportrichtung (40) der Transporteinheit (14) und zumindest im Wesentlichen parallel zu einer Horizontalebene (28) der Produktionsvorrichtung verlaufenden Richtung relativ zur Rahmeneinheit (12) bewegt wird, insbesondere translatorisch bewegt wird.

## Claims

1. Production device, in particular SMC production device, for a production of thermoset prepregs,
with at least one frame unit (12), with at least one transport unit (14), which is arranged on the frame unit (12), for a transport of at least one material strand (16), the transport unit (14) comprising at least one conveyor belt (72), which is configured for receiving the material strand (16), and a plurality of roller elements (70, 74), which the conveyor belt (72) of the transport unit (14) lies on and/or by means of which the conveyor belt (72) of the transport unit (14) is movably supported, and with at least one bearing unit (18), which is configured to support the transport unit (14) at least substantially entirely, i.e. by more than 50 %, in such a way that it is movable relative to the frame unit (12),
wherein the conveyor belt (72) and the plurality of roller elements (70, 74), by which the conveyor belt (72) is movably supported and/or guided, are arranged together on a rack unit (102) of the bearing unit (18),
wherein the rack unit (102) is supported in such a way that it is, in particular translationally, movable relative to the frame unit (12),
**characterised by** at least one housing unit (34), which in at least one state at least partially encloses the transport unit (14) at least substantially entirely,
the housing unit (34) comprising at least one movable and/or removable closure element (42, 44), which is configured at least for closing at least one opening (46, 48) through which at least the transport unit (14) is, at least substantially entirely, movable relative to the frame unit (12) at least partly out of the housing unit (34) by the bearing unit (18).

2. Production device according to one of the preceding claims,
**characterised in that** the bearing unit (18) is configured to support the transport unit (14) at least substantially entirely such that it is movable relative to the frame unit (12) along a direction extending at least substantially transversely to a main transport direction (40) of the transport unit (14).

3. Production device according to one of the preceding claims,
**characterised in that** the transport unit (14) comprises at least one densification unit (20, 22) for a densification of the at least one material strand (16), which is supported by the bearing unit (18) in such a way that it is, at least substantially entirely, translationally movable relative to the frame unit (12) along a direction extending at least substantially transversely to a main transport direction (40) of the transport unit (14).

4. Production device according to one of the preceding claims,
**characterised in that** the transport unit (14) comprises at least one densification unit (20) having at least one densification path main axis (24) and at least one further densification unit (22) having at least one densification path main axis (26), wherein the densification path main axis (24) of the densification unit (20) and the densification path main axis (26) of the further densification unit (22) are arranged at an angle to each other.

5. Production device according to one of the preceding claims,
**characterised in that** the transport unit (14) comprises at least one densification unit (20) and at least one further densification unit (22), which are supported by the bearing unit (18) in such a way that they are at least substantially entirely movable relative to the frame unit (12).

6. Production device according to one of the preceding claims,
**characterised by** at least one fibre cutting device (50), at least one material application unit (36, 38) and at least one housing unit (34) in which at least the transport unit (14), the at least one fibre cutting device (50) and the at least one material application unit (36, 38) are arranged at least partially.

7. Production device according to one of the preceding claims,
**characterised by** at least one material application unit (36, 38) comprising at least one squeegee element (52, 54), the material application unit (36, 38) comprising an inclined plane (56, 58) at least in a proximity of the squeegee element (52, 54).

8. Production device according to one of the preceding claims,
**characterised by** at least one material application unit (36, 38), which is arranged at least partially inclined relative to a horizontal plane (28) and which comprises at least one inclination setting unit (60, 62) that is configured for setting an inclination of the material application unit (36, 38) relative to the horizontal plane (28).

9. Production device according to one of the preceding claims,
**characterised by** at least one material application unit (36) and at least one further material application unit (38) which, viewed along a direction that extends at least substantially parallel to a horizontal plane (28), have a maximum distance from each other that is smaller than 10 m.

10. Production device according to one of the preceding claims,
**characterised in that** the transport unit (14) comprises at least one joining unit (66) comprising at least two roller elements (68, 70) having different diameters.

11. Method for a movement of a transport unit (14) of a production device, in particular of the production device according to one of the preceding claims, relative to a frame unit (12) of the production device,
wherein in at least one method step an inner row (92, 94) of roller elements (84, 86, 88, 90) of a densification unit (20) of the transport unit (14) and of a further densification unit (22) of the transport unit (14), which is arranged on a rack unit (102) of the production device, and/or an outer row (96, 98) of roller elements of the densification unit (20) and of the further densification unit (22), which is arranged on the rack unit (102), are together moved relative to the frame unit (12) as a result from a movement of the rack unit (102),
wherein in at least one method step the transport unit (14) is moved at least substantially entirely, i.e. by more than 50 %, relative to the frame unit (12), **characterised in that** in at least one method step the transport unit (14) is moved, in particular translationally moved, at least substantially entirely by the bearing unit (18) along a direction extending at least substantially transversely to a main transport direction (40) of the transport device (14) and at least substantially parallel to a horizontal plane (28) of the production device.

## Revendications

1. Dispositif de production, en particulier dispositif de production SMC, pour la fabrication des produits semi-finis thermodurcissables,
avec au moins une unité de cadre (12), avec au moins une unité de transport (14), disposée sur l'unité de cadre (12), pour un transport d'au moins un écheveau de matériel (16),
l'unité de transport (14) comprenant au moins une courroie transporteuse (72), qui est prévue pour recevoir l'écheveau de matériel (16), et comprenant une pluralité des éléments rouleaux (70, 74), sur lesquels s'adjoint la courroie transporteuse (72) de l'unité de transport (14) et/ou par lesquels la courroie transporteuse (72) de l'unité de transport (14) est supporté de façon mobile,
et avec au moins une unité palier (18) prévue à supporter l'unité de transport (14) d'une telle manière qu'elle est, au moins sensiblement entièrement, c'est-à-dire par plus de 50 %, mobile par rapport à l'unité de cadre (12),
où la courroie transporteuse (72) et la pluralité des éléments rouleaux (70, 74), par lesquels la courroie transporteuse (72) est supportée et/ou guidée d'une manière mobile, sont disposés ensemble sur une unité de bâti (102) de l'unité palier (18),
l'unité de bâti (102) étant supportée d'une telle manière qu'elle est, en particulier translationnellement, mobile par rapport à l'unité de cadre (12),
**caractérisé par** au moins une unité de boîtier (34) qui dans au moins un état au moins partiellement inclut au moins l'unité de transport (14) au moins sensiblement entièrement,
l'unité de boîtier (34) comportant au moins un élément de fermeture (42, 44) mouvable et/ou enlevable, qui est configuré au moins pour une fermeture d'au moins une aperture (46, 48) au travers de laquelle au moins l'unité de transport (14) est mouvable, au moins sensiblement entièrement, par rapport à l'unité de cadre (12), au moins partiellement hors de l'unité de boîtier (14) par le biais de l'unité palier (18).

2. Dispositif de production selon l'une quelconque des revendications précédentes, **caractérisé en ce que** l'unité palier (18) est configurée à supporter l'unité de transport (14), d'une telle manière qu'elle est, au moins sensiblement entièrement, mobile par rapport à l'unité de cadre (12) le long d'une direction s'étendant au moins sensiblement transversalement à une direction principale de transport (40) de l'unité de transport (14).

3. Dispositif de production selon l'une quelconque des revendications précédentes, **caractérisé en ce que** l'unité de transport (14) comporte au moins une unité de densification (20, 22) pour une densification de l'au moins un écheveau de matériel (16), qui est supportée par l'unité palier (18) d'une telle manière qu'elle est, au moins sensiblement entièrement, translationnellement mobile par rapport à l'unité de cadre (12), le long d'une direction s'étendant au moins sensiblement transversalement à une direction principale de transport (40) de l'unité de transport (14).

4. Dispositif de production selon l'une quelconque des revendications précédentes, **caractérisé en ce que** l'unité de transport (14) comporte au moins une unité de densification (20) ayant au moins un axe principal de trajet à densification (24), et au moins une autre unité de densification (22) ayant au moins un axe principal de trajet à densification (26),
l'axe principal de trajet à densification (24) de l'unité de densification (20) et l'axe principal de trajet à densification (26) de l'autre unité de densification (22) étant disposés à angle l'un par rapport à l'autre.

5. Dispositif de production selon l'une quelconque des revendications précédentes, **caractérisé en ce que** l'unité de transport (14) comporte au moins une unité de densification (20) et au moins une autre unité de densification (22), qui sont supportées par l'unité palier (18) d'une telle manière qu'elles sont, au moins sensiblement entièrement, mouvables par rapport à l'unité de cadre (12) par le biais de l'unité palier (18).

6. Dispositif de production selon l'une quelconque des revendications précédentes, **caractérisé par** au moins un appareil coupeur de fibres (50), au moins une unité applicateuse de matériel (36, 38) et au moins une unité de boîtier (34), dans laquelle au moins l'unité de transport (14), l'au moins un appareil coupeur de fibres (50) et l'au moins une unité applicateuse de matériel (36, 38) sont au moins partiellement agencés.

7. Dispositif de production selon l'une quelconque des revendications précédentes, **caractérisé par** au moins une unité applicateuse de matériel (36, 38) comprenant au moins un élément racloir (52, 54), l'unité applicateuse de matériel (36, 38) comportant un plan incliné (56, 58) au moins dans une proximité de l'élément racloir (52, 54).

8. Dispositif de production selon l'une quelconque des revendications précédentes, **caractérisé par** au moins une unité applicateuse de matériel (36, 38), disposée au moins partiellement inclinée par rapport à un plan horizontal (28) et comprenant au moins une unité d'ajustement d'inclinaison (60, 62), qui est configurée pour un ajustement d'une inclinaison de l'unité applicateuse de matériel (36, 38) par rapport au plan horizontal (28).

9. Dispositif de production selon l'une quelconque des revendications précédentes, **caractérisé par** au moins une unité applicateuse de matériel (36) et au moins une autre unité applicateuse de matériel (38) ayant, vues le long d'une direction s'étendant au moins sensiblement en parallèle à un plan horizontal (28), une distance maximale (64) l'une de l'autre, qui est inférieure à 10 m.

10. Dispositif de production selon l'une quelconque des revendications précédentes, **caractérisé en ce que** l'unité de transport (14) comporte au moins une unité de réunion (66) comprenant au moins deux éléments rouleaux (68, 70) ayant des diamètres différents.

11. Procédé pour un mouvement d'une unité de transport (14) d'un dispositif de production, en particulier du dispositif de production selon l'une quelconque des revendications précédentes, par rapport à une unité de cadre (12) du dispositif de production,
où dans au moins une étape de procédé une ligne intérieure (92, 94) d'éléments rouleaux (84, 86, 88, 90) d'une unité de densification (20) de l'unité de transport (14) et d'une autre unité de densification (22) de l'unité de transport (14), qui est agencée sur une unité de bâti (102) du dispositif de production et/ou une ligne extérieure (96, 98) d'éléments rouleaux de l'unité de densification (20) et de l'autre unité de densification (22), qui est agencée sur l'unité de bâti (102) du dispositif de production, sont mues ensemble par rapport à l'unité de cadre (12) dû à un mouvement de l'unité de bâti (102),
où dans a moins une étape de procédé l'unité de transport (14) est, au moins sensiblement entièrement, c'est-à-dire par plus de 50 %, mue par rapport à l'unité de cadre (12),
**caractérisé en ce que** dans au moins une étape de procédé l'unité de transport (14) est, au moins sensiblement entièrement, en particulier translationnellement, mue par rapport à l'unité de cadre (12) par l'unité palier (18) le long d'une direction s'étendant au moins sensiblement transversalement à une direction principale de transport (40) de l'unité de transport (14) et au moins sensiblement en parallèle à un plan horizontal (28) du dispositif de production.
